# EUROPEAN PATENT APPLICATION

(11) **EP 4 019 404 A1**
(43) Date of publication of application: **29.06.2022**
(21) Application number: 21217590.5
(22) Date of filing: 23.12.2021
(51) Int. Cl.: B64D 25/14, F17C 13/02, G01L 9/00, G01L 19/08

(54) **PRESSURE MONITORING SYSTEMS AND METHODS FOR MONITORING PRESSURE OF EVACUATION ASSEMBLY CHARGE CYLINDERS**

(30) Priority: 23.12.2020 IN 202041056068; 04.11.2021 US 202117519246
(71) Applicant: Goodrich Corporation, Charlotte, NC 28217-4578 (US)
(72) Inventor: VENNELAKANTI, Venkata Sai Sudheer Kumar, Bangalore (IN); JEGATHEESWARAN, Karthik, Bengaluru (IN)
(74) Representative: Dehns

(57) **Abstract**

A pressure monitoring system for a compressed fluid source may comprise a surface acoustic wave sensor (154) and a controller (180) operably coupled to the surface acoustic wave sensor. The controller may be configured to send a first radio frequency signal to the surface acoustic wave sensor, receive a second radio frequency signal from the surface acoustic wave sensor, and determine a pressure of the compressed fluid source based on the first radio frequency signal and the second radio frequency signal.

## Description

### CROSS-REFERENCE TO RELATED APPLICATIONS

This application claims priority to, and the benefit of, India Patent Application No. 202041056068, filed December 23, 2020 and titled "PRESSURE MONITORING SYSTEMS AND METHODS FOR MONITORING PRESSURE OF EVACUATION ASSEMBLY CHARGE CYLINDERS" .

### FIELD

The present disclosure relates to aircraft evacuation assemblies and, in particular, to systems and methods for monitoring evacuation assembly charge cylinders.

### BACKGROUND

Emergency evacuation assemblies may be used to exit an aircraft absent a jet way or other suitable means of egress for passengers. The evacuation assemblies may include an inflatable slide and one or more compressed fluid source(s), often referred to as "charge cylinders," to inflate the slide. Current compressed fluid sources may include a pressure gauge configured to measure a pressure within the compressed fluid source. Current pressure gauges may be either analog pressure gauges or digital pressure gauges. Analog gauges are typically configured for manual assessment, wherein, for example, maintenance personnel determine the pressure by viewing an indicator arm configured to point to a pressure measurement from a listing of possible pressure measurements. Determining the pressure of the compressed fluid source using an analog gauge can be less accurate, as maintenance personnel may have to estimate and interpret to which measurement the indicator arm is closest. While digital pressure gauges tend to produce more accurate pressure measurement readings, wired digital pressure gauges are generally associated with wiring between the pressure sensor and the digital display. This wiring add weights to the aircraft. Wireless digital pressure gauges typically include a battery. Battery life and battery performance can be affected by variance in temperature and/or by high altitudes, which tends to lead to increased maintenance time and costs.

### SUMMARY

A pressure monitoring system for a compressed fluid source is disclosed herein. In accordance with various embodiments, the pressure monitoring system may comprise a surface acoustic wave sensor, a controller operably coupled to the surface acoustic wave sensor, and a tangible, non-transitory memory configured to communicate with the controller. The tangible, non-transitory memory may have instructions stored thereon that, in response to execution by the controller, cause the controller to perform operations, which may comprise: sending, by the controller, a first radio frequency signal to the surface acoustic wave sensor; receiving, by the controller, a second radio frequency signal from the surface acoustic wave sensor; and determining, by the controller, a pressure of the compressed fluid source based on the first radio frequency signal and the second radio frequency signal.

In various embodiments, the surface acoustic wave sensor may comprise a substrate including a piezoelectric material, and an interdigital transducer formed on the substrate. The interdigital transducer may be configured to convert the first radio frequency signal to a surface acoustic wave. In various embodiments, the surface acoustic wave sensor may further comprise a reflector formed on the substrate. The reflector may be configured to generate a reflected surface acoustic wave by reflecting the surface acoustic wave generated by the interdigital transducer. In various embodiments, the interdigital transducer may be configured to convert the reflected surface acoustic wave to the second radio frequency signal.

In various embodiments, pressure monitoring system may further comprise a sensor housing. The surface acoustic wave sensor may be located in the sensor housing. A diaphragm may be located in the sensor housing. The substrate of the surface acoustic wave sensor may be located on the diaphragm such that deformation of the diaphragm results in a change in a strain of the piezoelectric material of the substrate. In various embodiments, the change in the strain of the piezoelectric material of the substrate may change a distance between the interdigital transducer and the reflector.

In various embodiments, determining, by the controller, the pressure of the compressed fluid source based on the first radio frequency signal and the second radio frequency signal may comprise: determining, by the controller, a phase shift between the first radio frequency signal and the second radio frequency signal; and determining, by the controller, the pressure of the compressed fluid source using the phase shift.

In various embodiments, the operations may further comprise comparing, by the controller, the pressure of the compressed fluid source to a threshold pressure; and commanding, by the controller, a display device to output an alert if the pressure of the compressed fluid source is less than the threshold pressure.

A method for monitoring a pressure of a compressed fluid source is also disclosed herein. In accordance with various embodiments, the method may comprises the steps of sending, by a controller, a first radio frequency signal to a surface acoustic wave sensor operably coupled to the compressed fluid source; receiving, by the controller, a second radio frequency signal from the surface acoustic wave sensor; and determining, by the controller, the pressure of the compressed fluid source based on the first radio frequency signal and the second radio frequency signal.

In various embodiments, determining, by the controller, the pressure of the compressed fluid source based on the first radio frequency signal and the second radio frequency signal may comprise determining, by the controller, a phase shift between the first radio frequency signal and the second radio frequency signal; and determining, by the controller, the pressure of the compressed fluid source using the phase shift.

In various embodiments, the method further comprise comparing, by the controller, the pressure of the compressed fluid source to a threshold pressure; and commanding, by the controller, a display to output an alert if the pressure of the compressed fluid source is less than the threshold pressure. In various embodiments, the method may further comprise commanding, by the controller, a display device to output the pressure of the compressed fluid source.

In various embodiments, the surface acoustic wave sensor may comprise: a substrate including a piezoelectric material; and an interdigital transducer formed on the substrate, the interdigital transducer being configured to convert the first radio frequency signal to a surface acoustic wave. In various embodiments, the surface acoustic wave sensor may further comprise a reflector formed on the substrate. The reflector may be configured to generate a reflected surface acoustic wave by reflecting the surface acoustic wave generated by the interdigital transducer. The interdigital transducer may be configured to convert the reflected surface acoustic wave to the second radio frequency signal.

In various embodiments, the substrate may be configured such that a change in the pressure of the compressed fluid source results in a change in a strain of the piezoelectric material of the substrate.

An evacuation assembly is also disclosed herein. In accordance with various embodiments, the evacuation assembly may comprise: a compressed fluid source and a pressure monitoring system operably coupled to the compressed fluid source. The pressure monitoring system may include a substrate including a piezoelectric material and an interdigital transducer formed on the substrate. The substrate may be configured such that a change in a pressure of the compressed fluid source results in a change in a strain of the piezoelectric material of the substrate. The interdigital transducer may be configured to receive a first radio frequency signal, convert the first radio frequency signal to a surface acoustic wave, and output a second radio frequency signal.

In various embodiments, the pressure monitoring system may further comprise a reflector formed on the substrate. The reflector may be configured to generate a reflected surface acoustic wave by reflecting the surface acoustic wave generated by the interdigital transducer. The interdigital transducer may be configured to convert the reflected surface acoustic wave to the second radio frequency signal.

In various embodiments, the change in the strain of the piezoelectric material of the substrate may change a distance between the interdigital transducer and the reflector. In various embodiments, a sensor housing may be coupled to the compressed fluid source, and a diaphragm may be located in the sensor housing. The substrate may be located on the diaphragm such that a deformation of the diaphragm results in the change in the strain of the piezoelectric material of the substrate.

In various embodiments, a controller may be configured to output the first radio frequency signal, receive the second radio frequency signal, and determine the pressure of the compressed fluid source based on the first radio frequency signal and the second radio frequency signal. An evacuation slide may be fluidly coupled to the compressed fluid source.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft, in accordance with various embodiments;
FIG. 2 illustrates an evacuation assembly with the evacuation slide in a deployed position, in accordance with various embodiments;
FIG. 3 illustrates a schematic of a pressure monitoring system for a compressed fluid source of an evacuation assembly, in accordance with various embodiments;
FIGs. 4A and 4B illustrate a SAW sensor of a pressure monitoring system operably coupled to a compressed fluid source, in accordance with various embodiments;
FIGs. 5A and 5B, illustrate a method for monitoring the pressure of a compressed fluid source, in accordance with various embodiments; and
FIG. 6 illustrates a pressure monitoring system for a compressed fluid source located near an aircraft exit door, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option.

Surface lines and/or cross hashing may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity.

As used herein, the term "non-transitory" is to be understood to remove only propagating transitory signals per se from the claim scope and does not relinquish rights to all standard computer-readable media that are not only propagating transitory signals per se.

Disclosed herein is a pressure monitoring system for a compressed fluid source of an aircraft evacuation assembly. In accordance with various embodiments, the pressure monitoring system includes a surface acoustic wave (SAW) sensor, which can be operably coupled to the compressed fluid source. The SAW sensor may include a piezoelectric substrate having an interdigital transducer (IDT) and SAW reflectors formed thereon. The IDT is configured to transform radio frequency (RF) signals, received via an antenna, into surface acoustic waves and transform surface acoustic waves, received via the SAW reflectors, into RF signals. The IDT is in communication with a controller (e.g., a RF reader unit) configured to transmit and receive the RF signals. In accordance with various embodiments, the controller is configured to determine the phase and/or change in phase (e.g., a phase shift) of the RF signals sent to the SAW sensor and the RF signals received from the SAW sensor and determine the pressure applied to the SAW sensor, and thus the pressure of the compressed fluid source, based on the phase of these RF signals.

While the pressure monitoring systems disclosed herein may find particular use in connection with aircraft evacuation assemblies, various aspects of the disclosed systems may be adapted for performance in a variety of other inflatable assemblies. For example, the pressure monitoring systems may be employed with inflatable raft assemblies and/or any other assemblies having compressed fluid sources. As such, numerous applications of the present disclosure may be realized.

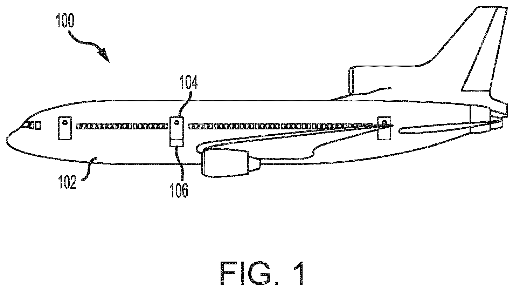

Referring now to FIG. 1, an aircraft 100 is shown. Aircraft 100 may include a fuselage 102 having plurality of exit doors, including exit door 104. Aircraft 100 may include one or more evacuation assemblies positioned near a corresponding exit door. For example, aircraft 100 includes an evacuation assembly 106 positioned near exit door 104. In the event of an emergency, exit door 104 may be opened by a passenger or crew member of aircraft 100. In various embodiments, evacuation assembly 106 may deploy in response to exit door 104 being opened or in response to another action taken by a passenger or crew member, such as the depression of a button, the actuation of a lever, or the like.

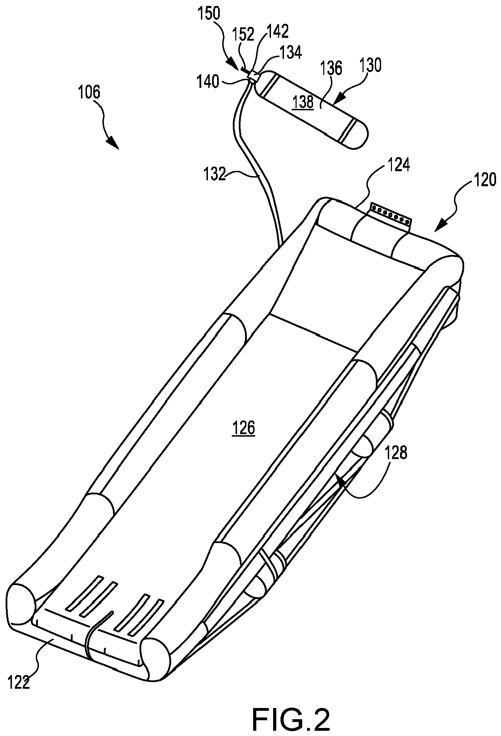

With reference to FIG. 2, additional details of evacuation assembly 106 are illustrated. In accordance with various embodiments, evacuation assembly 106 includes an evacuation slide 120 and a compressed fluid source 130. In accordance with various embodiments, evacuation slide 120 includes a toe end 122 and a head end 124 opposite toe end 122. Head end 124 may be coupled to an aircraft structure (e.g., fuselage 102 in FIG. 1). In accordance with various embodiments, evacuation slide 120 is an inflatable slide. Evacuation slide 120 includes a sliding surface 126 and an underside surface 128 opposite sliding surface 126. Sliding surface 126 extends from head end 124 to toe end 122. During an evacuation event, underside surface 128 may be oriented toward an exit surface (e.g., toward the ground or toward a body of water). Evacuation slide 120 is illustrated as a single lane slide; however, evacuation slide 120 may comprise any number of lanes.

Evacuation assembly 106 includes compressed fluid source 130 (also referred to as a charge cylinder). Compressed fluid source 130 is configured to deliver a pressurized gas to inflate evacuation slide 120. Compressed fluid source 130 is fluidly coupled to evacuation slide 120. For example, compressed fluid source 130 may be fluidly coupled to evacuation slide 120 via a hose, or conduit, 132. In response to receiving gas from compressed fluid source 130, evacuation slide 120 begins to inflate.

In accordance with various embodiments, conduit 132 may be connected to a neck 134 of compressed fluid source 130. Neck 134 may be a pipe, or other conduit, that extends from the cylindrically-shaped housing 136 of compressed fluid source 130. Neck 134 is fluidly connected to an internal volume 138 of compressed fluid source 130 that is defined by housing 136. In various embodiments, compressed fluid source 130 may include a valve 140 located between internal volume 138 and conduit 132 (e.g., between neck 134 and conduit 132. Valve 140 is configured to regulate the flow of fluid from compressed fluid source 130 to evacuation slide 120. In this regard, when evacuation slide 120 is in a stowed (or deflated) state, valve 140 is in a closed position. In response to deployment of evacuation assembly 106, valve 140 may be forced (e.g., translated) to an open position, thereby allowing fluid to flow from compressed fluid source 130 to evacuation slide 120.

In accordance with various embodiments, a pressure monitoring system 150 is operably coupled to compressed fluid source 130. Stated differently, compressed fluid source 130 may include pressure monitoring system 150. Pressure monitoring system 150 is configured to determine a pressure of compressed fluid source 130. Pressure monitoring system 150 may include a sensor housing 152 fluidly coupled to compressed fluid source 130. Sensor housing 152 is coupled to compressed fluid source 130 such that the pressure within sensor housing 152 is indicative of, and/or correlates to, the pressure within housing 136 of compressed fluid source 130. In various embodiments, sensor housing 152 is fluidly coupled to a pressure measurement port 142 of compressed fluid source 130. In various embodiments, pressure measurement port 142 may be located on neck 134.

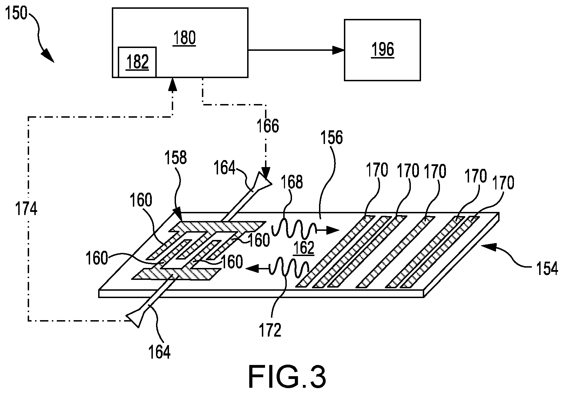

With reference to FIG. 3, additional details of pressure monitoring system 150 are illustrated. In accordance with various embodiments, pressure monitoring system 150 includes a SAW sensor 154. SAW sensor 154 includes a substrate 156. Substrate 156 is formed of piezoelectric material. For example, substrate 156 may be formed of quartz (SiO₂), lithium niobite (LiNbO₃), zinc oxide (ZnO), or any other piezoelectric material capable of generating surface acoustic waves. SAW sensor 154 includes an IDT 158. IDT 158 includes overlapping fingers 160 formed over surface 162 of substrate 156. Fingers 160 may be formed of metal. For example, fingers 160 metal may comprise aluminum (Al), copper (Cu), tin (Sn), nickel (Ni), gold (Au), silver (Ag), or other suitable electrically conductive material or combination thereof. IDT 158 may be formed by photolithography, chemical vapor deposition (CVD), physical vapor deposition (PVD), electrolytic plating, electroless plating processes, 3D printing, or any other suitable metal deposition process. An antenna 164 is operably coupled to IDT 158. IDT 158 is configured to convert RF signals 166, received via antenna 164, to surface acoustic waves 168 by generating periodically distributed mechanical forces via piezoelectric effect.

SAW sensor 154 further includes one or more reflectors 170 formed over surface 162 of substrate 156. Reflectors 170 may be metal. For example, reflectors 170 may comprise Al, Cu, Sn, Ni, Au, Ag, or other suitable electrically conductive material or combination thereof. Reflectors 170 may be formed over surface 162 using photolithography, PVD, CVD, electrolytic plating, electroless plating, or other suitable metal deposition technique. The position of reflectors 170 on surface 162 is selected such that the surface acoustic waves 168 produced by IDT 158 will be reflected back to IDT 158 by reflectors 170. IDT 158 is configured to convert the reflected surface acoustic waves 172, received from reflectors 170, to RF signals 174, which are output by antenna 164. The distance between IDT 158 and each reflector 170 can be unique to SAW sensor 154 and may be used to establish a unique sensor identification for SAW sensor 154.

In accordance with various embodiments, pressure monitoring system 150 includes a controller 180 wirelessly connected to SAW sensor 154. Controller 180 may include one or more logic devices such as one or more of a central processing unit (CPU), an accelerated processing unit (APU), a digital signal processor (DSP), a field programmable gate array (FPGA), an application specific integrated circuit (ASIC), or the like. Controller 180 further includes any tangible, non-transitory computer-readable storage medium 182 known in the art. The storage medium 182 has instructions stored thereon for that, in response to execution by controller 180, cause controller 180 to perform various operations to determine a pressure of compressed fluid source 130 (FIG. 2).

Controller 180 is configured to transmit (i.e., output) RF signals 166 to SAW sensor 154 and receive RF signals 174 from SAW sensor 154. Controller 180 is further configured to determine a pressure of compressed fluid source 130 based on the phase of RF signals 166 and RF signals 174. In this regard, controller 180 is configured to determine a pressure being applied on the SAW sensor 154 based on a comparison of the phase of RF signals 166 to the phase of RF signals 174. Controller 180 may be operably coupled to a display device 196. Controller 180 may be configured to send commands to display device 196. For example, controller 180 may command display device 196 to display the pressure of compressed fluid source 130.

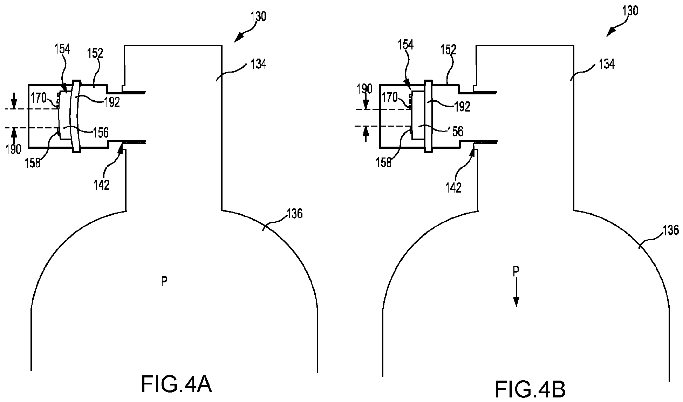

With additional reference to FIGs. 4A and 4B, substrate 156 of SAW sensor 154 may be positioned in sensor housing 152 such that changes in the pressure within sensor housing 152, which correlate to changes in the pressure P of compressed fluid source 130, cause a distance 190 between IDT 158 and reflectors 170 to change (i.e., increase or decrease). The change in distance 190 causes the propagation time to change for both surface acoustic waves 168 and reflected surface acoustic waves 172, with momentary reference to FIG. 3. The change in propagation time changes (e.g., shifts) the phase of RF signals 174 output by SAW sensor 154 as compared to the phase of the RF signals 166 received by SAW sensor 154. In this regard, the phase delay and the pressure calculated by controller 180 will change in response to changes in the strain on the piezoelectric material of substrate 156 due to increases or decreases in the pressure applied to diaphragm 192 and substrate 156 by the fluid from compressed fluid source 130.

In various embodiments, SAW sensor 154 may be located on a diaphragm 192 within sensor housing 152. Diaphragm 192 is configured to deform (e.g., bend, stretch, contract, etc.) in response to changes in pressure within sensor housing 152. For example, diaphragm 192 may be configured such that a decrease in pressure P within compressed fluid source 130 causes diaphragm 192 to deform (e.g., contract). The deformation of diaphragm 192, in response to decreased pressure P, causes the distance 190 between IDT 158 and reflectors 170 to decrease. The decrease in distance 190 changes the phase of the output RF signals 174 (FIG. 3), as compared to the phase of RF signals 166. Controller 180 may thus determine pressure P based on the phase shift of output RF signals 174. While FIG. 4B shows diaphragm 192 contracting and distance 190 decreasing in response to a decrease in pressure P, it is contemplated and understood that diaphragm 192 may be configured, and/or substrate 156 may be attached to diaphragm 192, such that distance 190 increases in response to a decrease in pressure P.

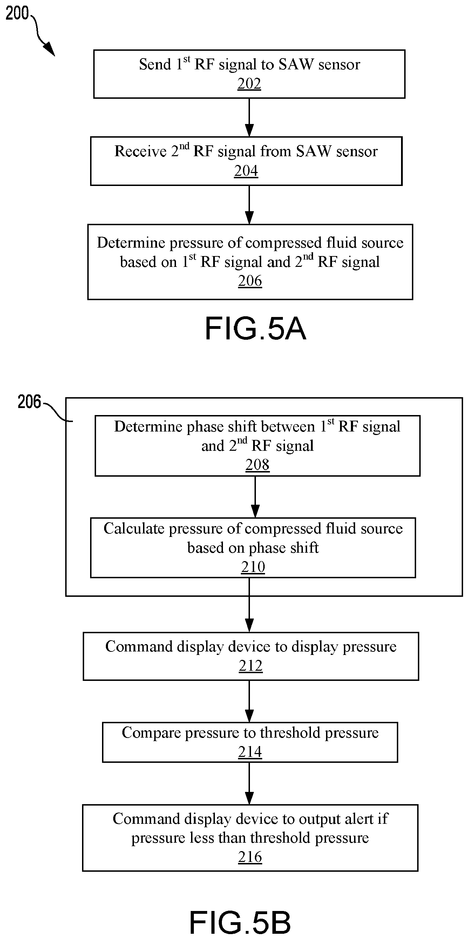

With reference to FIG. 5A, and continuing reference to FIG. 3, a method 200 of monitoring pressure is illustrated. Method 200 may be carried out by controller 180 and pressure monitoring system 150. Method 200 may include the steps of sending, by controller 180, a first RF signal (i.e.., RF signal 166) to SAW sensor 154 (step 202) and receiving a second RF signal (i.e., RF signal 174) from SAW sensor 154 (step 204). As described above, SAW sensor 154 comprises substrate 156, which includes a piezoelectric material, and IDT 158, which is formed on substrate 156. IDT 158 is configured to convert the first RF signal to a surface acoustic wave 168. SAW sensor 154 further comprises reflector(s) 170 formed on substrate 156. Reflector(s) 170 is/are configured to generate a reflected surface acoustic wave 172 by reflecting the surface acoustic wave 168 generated by IDT 158. IDT 158 is configured to convert the reflected surface acoustic wave 172 to the second RF.

Method 200 may further include determining a pressure of compressed fluid source 130 based on the first RF signal and the second RF signal (step 206). With additional reference to FIG. 5B, step 206 may include determining, by controller 180, a phase shift between the first RF signal and the second RF signal (step 208), and calculating, by controller 180, the pressure of compressed fluid source 130 based on the phase shift (step 210). In various embodiments, method 200 may further include commanding, by controller 180, a display device 196 to display the pressure of compressed fluid source 130 (step 212). In various embodiments, method 200 may further comprise comparing, by controller 180, the pressure of compressed fluid source 130 to a threshold pressure (step 214) and commanding, by controller 180, the display device 196 to output an alert if the pressure of compressed fluid source 130 is less than the threshold pressure (step 216). The alert may be a visual alert, an audio alter, a maintenance code, or similar message.

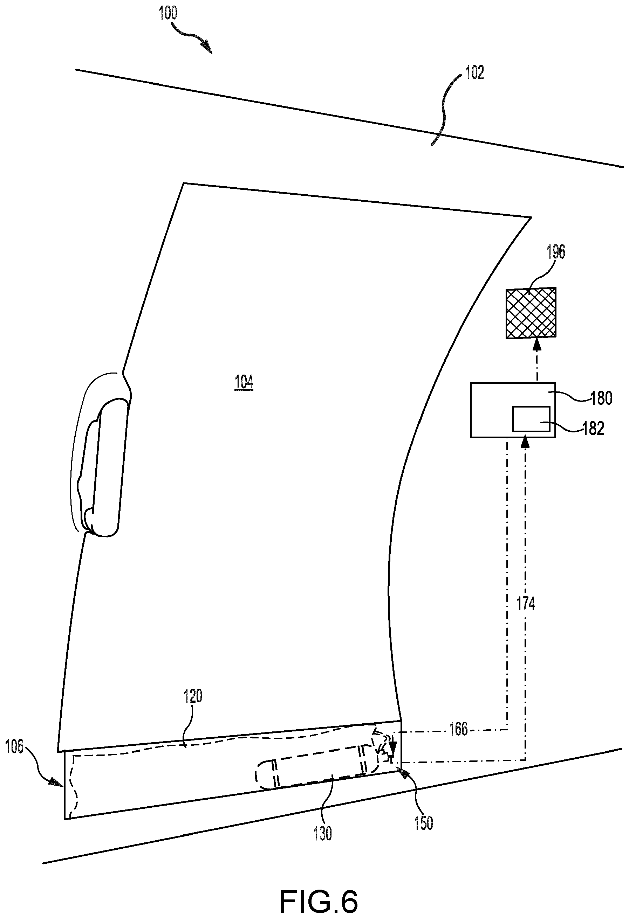

With reference to FIG. 6, in various embodiments, controller 180 may be position on or near exit door 104. Controller 180 is located within the range of SAW sensor 154. Controller 180 may be powered using aircraft power. In this regard, no dedicated power sources and/or batteries may be employed to operate SAW sensor 154. While display device 196 is illustrated as located near exit door 104, it is contemplated and understood that display device 196, or additional display devices operably coupled to controller 180, may be located in other locations in the aircraft. For example, a display device may be located in the cockpit. Controller 180 may also be in communication with display devices that are on the ground and/or that may be accessed by ground crews or maintenance personnel.

Pressure monitoring system 150 may eliminate the need for wiring and/or a battery or other power source dedicated to powering SAW sensor 154. SAW sensor 154 provides a reliable, low cost pressure sensor that is small size and low weight, and can operate in extreme conditions (e.g., high temperatures or icy conditions), in which other pressure sensors tend to exhibit reduced performance. Display device 196 allows for remote reading of the pressure information for compressed fluid source 130. In this regard, neck 134 and/or compressed fluid source 130 do not need to be readily accessible to determine the pressure of compressed fluid source 130.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments within the scope of the claims.

## Claims

1. A pressure monitoring system for a compressed fluid source, comprising:
a surface acoustic wave sensor (154);
a controller (180) operably coupled to the surface acoustic wave sensor; and
a tangible, non-transitory memory (182) configured to communicate with the controller, the tangible, non-transitory memory having instructions stored thereon that, in response to execution by the controller, cause the controller to perform operations comprising:
sending, by the controller, a first radio frequency signal to the surface acoustic wave sensor;
receiving, by the controller, a second radio frequency signal from the surface acoustic wave sensor; and
determining, by the controller, a pressure of the compressed fluid source based on the first radio frequency signal and the second radio frequency signal.

2. The pressure monitoring system of claim 1, wherein the surface acoustic wave sensor comprises:
a substrate (156) including a piezoelectric material; and
an interdigital transducer (158) formed on the substrate, the interdigital transducer being configured to convert the first radio frequency signal to a surface acoustic wave.

3. The pressure monitoring system of claim 2, wherein the surface acoustic wave sensor further comprises a reflector (170) formed on the substrate, the reflector being configured to generate a reflected surface acoustic wave by reflecting the surface acoustic wave generated by the interdigital transducer, and optionally wherein the interdigital transducer is configured to convert the reflected surface acoustic wave to the second radio frequency signal.

4. The pressure monitoring system of claim 3, further comprising:
a sensor housing (152), wherein the surface acoustic wave sensor is located in the sensor housing; and
a diaphragm (192) located in the sensor housing, wherein the substrate of the surface acoustic wave sensor is located on the diaphragm such that deformation of the diaphragm results in a change in a strain of the piezoelectric material of the substrate, and optionally wherein the change in the strain of the piezoelectric material of the substrate changes a distance between the interdigital transducer and the reflector.

5. The pressure monitoring system of any preceding claim, wherein the determining, by the controller, the pressure of the compressed fluid source based on the first radio frequency signal and the second radio frequency signal comprises:
determining, by the controller, a phase shift between the first radio frequency signal and the second radio frequency signal; and
determining, by the controller, the pressure of the compressed fluid source using the phase shift.

6. The pressure monitoring system of claim 5, wherein the operations further comprise:
comparing, by the controller, the pressure of the compressed fluid source to a threshold pressure; and
commanding, by the controller, a display device to output an alert if the pressure of the compressed fluid source is less than the threshold pressure.

7. A method for monitoring a pressure of a compressed fluid source, comprising:
sending, by a controller (180), a first radio frequency signal to a surface acoustic wave sensor operably coupled to the compressed fluid source;
receiving, by the controller, a second radio frequency signal from the surface acoustic wave sensor; and
determining, by the controller, the pressure of the compressed fluid source based on the first radio frequency signal and the second radio frequency signal.

8. The method of claim 7, wherein determining, by the controller, the pressure of the compressed fluid source based on the first radio frequency signal and the second radio frequency signal comprises:
determining, by the controller, a phase shift between the first radio frequency signal and the second radio frequency signal; and
determining, by the controller, the pressure of the compressed fluid source using the phase shift.

9. The method of claim 8, further comprising:
comparing, by the controller, the pressure of the compressed fluid source to a threshold pressure; and
commanding, by the controller, a display to output an alert if the pressure of the compressed fluid source is less than the threshold pressure.

10. The method of claim 8 or 9, further comprising commanding, by the controller, a display device to output the pressure of the compressed fluid source.

11. An evacuation assembly, comprising:
a compressed fluid source (130);
a pressure monitoring system (150) operably coupled to the compressed fluid source, the pressure monitoring system including:
a substrate (156) including a piezoelectric material, wherein the substrate is configured such that a change in a pressure of the compressed fluid source results in a change in a strain of the piezoelectric material of the substrate; and
an interdigital transducer (158) formed on the substrate, the interdigital transducer being configured to receive a first radio frequency signal, convert the first radio frequency signal to a surface acoustic wave, and output a second radio frequency signal.

12. The evacuation assembly of claim 11, wherein the pressure monitoring system further comprises a reflector (170) formed on the substrate, the reflector being configured to generate a reflected surface acoustic wave by reflecting the surface acoustic wave generated by the interdigital transducer, and wherein the interdigital transducer is configured to convert the reflected surface acoustic wave to the second radio frequency signal.

13. The evacuation assembly of claim 11 or 12, wherein the change in the strain of the piezoelectric material of the substrate changes a distance between the interdigital transducer and the reflector.

14. The evacuation assembly of claim 13, further comprising:
a sensor housing (152) coupled to the compressed fluid source; and
a diaphragm (192) located in the sensor housing, wherein the substrate is located on the diaphragm such that a deformation of the diaphragm results in the change in the strain of the piezoelectric material of the substrate.

15. The evacuation assembly of claim 14, further comprising:
a controller (130) configured to output the first radio frequency signal, receive the second radio frequency signal, and determine the pressure of the compressed fluid source based on the first radio frequency signal and the second radio frequency signal; and
an evacuation slide (120) fluidly coupled to the compressed fluid source.
